# EUROPEAN PATENT APPLICATION

(11) **EP 4 529 031 A1**
(43) Date of publication of application: **26.03.2025**
(21) Application number: 23909534.2
(22) Date of filing: 25.10.2023
(51) Int. Cl.: H04B 7/0404, H04B 1/401, H04B 1/04

(54) **TERMINAL DEVICE AND CONTROL METHOD**

(30) Priority: 27.12.2022 CN 202211686172
(71) Applicant: Honor Device Co., Ltd., Shenzhen, Guangdong 518040 (CN)
(72) Inventor: ZHANG, Xinli, Shenzhen, Guangdong 518040 (CN); LI, Zheng, Shenzhen, Guangdong 518040 (CN)
(74) Representative: Goddar, Heinz J.
(86) International application number: PCT/CN2023/126614
(87) International publication number: WO 2024/139600

(57) **Abstract**

Embodiments of this application provide a terminal device and a control method, and relate to the field of terminal technologies. The terminal device includes a power amplifier, a first circuit, a second circuit, a first antenna, a second antenna, a first frequency division switch, and a second frequency division switch; the first circuit includes N duplexers, and the second circuit includes M duplexers; the first frequency division switch includes N first output terminals, and the second frequency division switch includes M output terminals; both N and M are natural numbers; first terminals of the N duplexers are respectively connected to the N first output terminals of the first frequency division switch, and first terminals of the M duplexers are respectively connected to the M output terminals of the second frequency division switch; the first antenna is connected to the first circuit, and the second antenna is connected to the second circuit; and the power amplifier is configured to access the first circuit to support the first antenna to send a signal, or access the second circuit to support the second antenna to send a signal. In this way, losses in a signal transmission process can be reduced, and signal transmission efficiency can be improved.

## Description

This application claims priority to the Chinese Patent Application No. 202211686172.X, filed with China National Intellectual Property Administration on December 27, 2022, and entitled "TERMINAL DEVICE AND CONTROL METHOD", which is incorporated herein by reference in its entirety.

### TECHNICAL FIELD

This application relates to the field of terminal technologies, and in particular, to a terminal device and a control method.

### BACKGROUND

With development of terminal technologies, a radio frequency front-end circuit and an antenna are usually disposed in a terminal device, and the terminal device may implement communication by using the radio frequency front-end circuit and the antenna.

In some implementations, the antenna may include a primary antenna and a diversity antenna, and the radio frequency front-end circuit may include a transmit circuit, a primary receive circuit, a diversity receive circuit, and an antenna switching switch. The transmit circuit and the primary receive circuit may be combined into a transceiver circuit, and the transceiver circuit may be connected to the primary antenna, so that a signal received by the primary antenna is transmitted to the primary receive circuit in the transceiver circuit by using the antenna switching switch. The diversity receive circuit may be connected to the diversity antenna, so that a signal received by the diversity antenna is transmitted to the diversity receive circuit by using the antenna switching switch. A transmit signal may be transmitted to the primary antenna by using the transmit circuit in the transceiver circuit and the antenna switching switch for transmission, or transmitted to the diversity antenna by using the transmit circuit in the transceiver circuit and the antenna switching switch for transmission.

However, in the foregoing implementation, when the terminal device receives and sends signals, relatively large losses may be generated, which affects signal transmission efficiency.

### SUMMARY

Embodiments of this application provide a terminal device and a control method, to reduce signal transmission losses and improve signal transmission efficiency.

According to a first aspect, an embodiment of this application provides a terminal device. The terminal device includes a power amplifier, a first circuit, a second circuit, a first antenna, a second antenna, a first frequency division switch, and a second frequency division switch; the first circuit includes N duplexers, and the second circuit includes M duplexers; the first frequency division switch includes N first output terminals, and the second frequency division switch includes M output terminals; both N and M are natural numbers; first terminals of the N duplexers are respectively connected to the N first output terminals of the first frequency division switch, and first terminals of the M duplexers are respectively connected to the M output terminals of the second frequency division switch; the first antenna is connected to the first circuit, and the second antenna is connected to the second circuit; and the power amplifier is configured to access the first circuit to support the first antenna to send a signal, or access the second circuit to support the second antenna to send a signal.

In this way, both the first circuit and the second circuit of the terminal device include a plurality of duplexers, so that both the first circuit and the second circuit can support signal sending and receiving. In addition, by multiplexing the power amplifier, when the terminal device sends a signal, the power amplifier may access the first circuit or the second circuit. In this way, there is no need to dispose an antenna switching switch after the first circuit and the second circuit, so that when a signal is transmitted between the first antenna and the first circuit, and when a signal is transmitted between the second antenna and the second circuit, the signal does not need to pass through the switching switch, which can reduce losses in a signal transmission process and improve signal transmission efficiency.

In a possible implementation, the second circuit is disposed at a location less than a preset distance from the second antenna; the terminal device further includes a first connecting line; the first frequency division switch further includes a second output terminal; the power amplifier is connected to an input terminal of the first frequency division switch, the second output terminal is connected to one end of the first connecting line, and the other end of the first connecting line is connected to an input terminal of the second frequency division switch. In this way, a distance between the second circuit and the second antenna is shortened, and losses of a signal during transmission between the second circuit and the second antenna can be reduced. In addition, the power amplifier may access the second circuit by using the first frequency division switch, the first connecting line, and the second frequency division switch, to multiplex the power amplifier.

In a possible implementation, the terminal device further includes a second connecting line; the first circuit further includes a first low noise amplifier, a third frequency division switch, a fourth frequency division switch, and Q filters, the second circuit further includes a second low noise amplifier, a fifth frequency division switch, a sixth frequency division switch, and L filters, and both Q and L are natural numbers; the third frequency division switch includes Q+N input terminals, and the fourth frequency division switch includes Q+N input terminals; and the fifth frequency division switch includes L+M input terminals, and the sixth frequency division switch includes L+M input terminals; the first low noise amplifier is connected to an output terminal of the third frequency division switch, one terminals of the Q filters are respectively connected to the Q input terminals of the third frequency division switch, the other terminals of the Q filters are respectively connected to the Q input terminals of the fourth frequency division switch, second terminals of the N duplexers are respectively connected to the N input terminals of the third frequency division switch, third terminals of the N duplexers are respectively connected to the N input terminals of the fourth frequency division switch, an output terminal of the fourth frequency division switch is connected to one end of the second connecting line, and the other end of the second connecting line is connected to the first antenna; and the second low noise amplifier is connected to an output terminal of the fifth frequency division switch, one terminals of the L filters are respectively connected to the L input terminals of the fifth frequency division switch, the other terminals of the L filters are respectively connected to the L input terminals of the sixth frequency division switch, second terminals of the M duplexers are respectively connected to the M input terminals of the fifth frequency division switch, third terminals of the M duplexers are respectively connected to the M input terminals of the sixth frequency division switch, and an output terminal of the sixth frequency division switch is connected to the second antenna.

In this way, the terminal device can receive, by using the first circuit, a signal transmitted by the first antenna, and can transmit a signal to the first antenna for sending; or can receive, by using the second circuit, a signal transmitted by the second antenna, and can transmit a signal to the second antenna for sending.

In a possible implementation, the terminal device further includes a controller; and the controller is configured to: when a downlink reference signal received power of the first antenna is greater than or equal to a first preset value, or when the downlink reference signal received power of the first antenna is less than the first preset value, and a first value is less than or equal to a second preset value, control the power amplifier to access the first circuit by using any first output terminal of the first frequency division switch, where the first value is a difference between the downlink reference signal received power of the first antenna and a downlink reference signal received power of the second antenna; and the controller is further configured to: when the downlink reference signal received power of the first antenna is less than the first preset value, and the first value is greater than the second preset value, control the power amplifier to access the second circuit by using any output terminal of the second frequency division switch. In this way, when the terminal device sends a signal, the controller can control the power amplifier to access the first circuit to support the first antenna to send the signal, or control the power amplifier to access the second circuit to support the second antenna to send the signal.

In a possible implementation, the first circuit is disposed at a location less than a preset distance from the first antenna; and the second circuit is disposed at a location less than a preset distance from the second antenna; the terminal device further includes a third connecting line and a fourth connecting line; and one end of the third connecting line is connected to the power amplifier, the other end of the third connecting line is connected to an input terminal of the first frequency division switch, one end of the fourth connecting line is connected to the power amplifier, and the other end of the fourth connecting line is connected to an input terminal of the second frequency division switch. In this way, by disposing the first circuit close to the first antenna, a distance between the first circuit and the first antenna is shortened, and losses of a signal during transmission between the first circuit and the first antenna can be reduced. By disposing the second circuit close to the second antenna, a distance between the second circuit and the second antenna is shortened, and losses of a signal during transmission between the second circuit and the second antenna can be reduced.

In a possible implementation, the terminal device further includes a selection switch; and the power amplifier is connected to a first terminal of the selection switch, a second terminal of the selection switch is connected to one end of the third connecting line, and a third terminal of the selection switch is connected to one end of the fourth connecting line. In this way, the power amplifier can access, by using the second terminal of the selection switch, a circuit connected to the third connecting line, or can access, by using the third terminal of the selection switch, a circuit connected to the fourth connecting line.

In a possible implementation, the first circuit further includes a third low noise amplifier, a seventh frequency division switch, an eighth frequency division switch, and S filters, the second circuit further includes a fourth low noise amplifier, a ninth frequency division switch, a tenth frequency division switch, and Z filters, and both S and Z are natural numbers; the seventh frequency division switch includes S+N input terminals, and the eighth frequency division switch includes S+N input terminals; and the ninth frequency division switch includes Z+M input terminals, and the tenth frequency division switch includes Z+M input terminals; the third low noise amplifier is connected to an output terminal of the seventh frequency division switch, one terminals of the S filters are respectively connected to the S input terminals of the seventh frequency division switch, the other terminals of the S filters are respectively connected to the S input terminals of the eighth frequency division switch, second terminals of the N duplexers are respectively connected to the N input terminals of the seventh frequency division switch, third terminals of the N duplexers are respectively connected to the N input terminals of the eighth frequency division switch, and an output terminal of the eighth frequency division switch is connected to the first antenna; and the fourth low noise amplifier is connected to an output terminal of the ninth frequency division switch, one terminals of the Z filters are respectively connected to the Z input terminals of the ninth frequency division switch, the other terminals of the Z filters are respectively connected to the Z input terminals of the tenth frequency division switch, second terminals of the M duplexers are respectively connected to the M input terminals of the ninth frequency division switch, third terminals of the M duplexers are respectively connected to the M input terminals of the tenth frequency division switch, and an output terminal of the tenth frequency division switch is connected to the second antenna.

In this way, the terminal device can receive, by using the first circuit, a signal transmitted by the first antenna, and can transmit a signal to the first antenna for sending; or can receive, by using the second circuit, a signal transmitted by the second antenna, and can transmit a signal to the second antenna for sending.

In a possible implementation, the terminal device further includes a controller; and the controller is configured to: when a downlink reference signal received power of the first antenna is greater than or equal to a first preset value, or when the downlink reference signal received power of the first antenna is less than the first preset value, and a first value is less than or equal to a second preset value, control the second terminal of the selection switch to be in an on state, and control the power amplifier to access the first circuit by using the third connecting line and any first output terminal of the first frequency division switch, where the first value is a difference between the downlink reference signal received power of the first antenna and a downlink reference signal received power of the second antenna; and the controller is further configured to: when the downlink reference signal received power of the first antenna is less than the first preset value, and the first value is greater than the second preset value, control the third terminal of the selection switch to be in an on state, and control the power amplifier to access the second circuit by using the fourth connecting line and any output terminal of the second frequency division switch. In this way, when the terminal device sends a signal, the controller can control the power amplifier to access the first circuit to support the first antenna to send the signal, or control the power amplifier to access the second circuit to support the second antenna to send the signal.

According to a second aspect, an embodiment of this application provides a control method, the method is applied to the terminal device described in any possible implementation of the first aspect, and the method includes: When a downlink reference signal received power of a first antenna is greater than or equal to a first preset value, or when the downlink reference signal received power of the first antenna is less than the first preset value, and a first value is less than or equal to a second preset value, a controller of the terminal device controls a power amplifier to access a first circuit by using any first output terminal of a first frequency division switch, where the first value is a difference between the downlink reference signal received power of the first antenna and a downlink reference signal received power of a second antenna; or when the downlink reference signal received power of the first antenna is less than the first preset value, and the first value is greater than the second preset value, the controller controls the power amplifier to access a second circuit by using any output terminal of a second frequency division switch. In this way, the terminal device can determine an antenna with a relatively good transmission effect based on the downlink reference signal received power of the first antenna and the downlink reference signal received power of the second antenna, and control, by using the controller, the power amplifier to access a circuit corresponding to the antenna.

According to a third aspect, an embodiment of this application provides a terminal device, and the terminal device includes a radio frequency chip, a fifth connecting line, a sixth connecting line, a first power amplifier, a second power amplifier, a first circuit, a second circuit, a first antenna, a second antenna, a first frequency division switch, and a second frequency division switch; the first circuit includes N duplexers, and the second circuit includes M duplexers; the first frequency division switch includes N output terminals, and the second frequency division switch includes M output terminals; and both N and M are natural numbers; a first terminal of the radio frequency chip is connected to one end of the fifth connecting line, the other end of the fifth connecting line is connected to an input terminal of the first power amplifier, an output terminal of the first power amplifier is connected to an input terminal of the first frequency division switch, and first terminals of the N duplexers are respectively connected to the N output terminals of the first frequency division switch; a second terminal of the radio frequency chip is connected to one end of the sixth connecting line, the other end of the sixth connecting line is connected to an input terminal of the second power amplifier, an output terminal of the second power amplifier is connected to an input terminal of the second frequency division switch, and first terminals of the M duplexers are respectively connected to the M output terminals of the second frequency division switch; the first antenna is connected to the first circuit, and the second antenna is connected to the second circuit; the first power amplifier is configured to access the first circuit to support the first antenna to send a signal; and the second power amplifier is configured to access the second circuit to support the second antenna to send a signal.

In a possible implementation, the first circuit is disposed at a location less than a preset distance from the first antenna; the second circuit is disposed at a location less than the preset distance from the second antenna; and the first power amplifier is disposed at a location less than the preset distance from the first circuit, and the second power amplifier is disposed at a location less than the preset distance from the second circuit. In this way, both the first power amplifier and the first circuit are disposed close to the first antenna, so that a distance between the first power amplifier and the first antenna is shortened, and losses of a signal during transmission between the first power amplifier and the first antenna are relatively small. Both the second power amplifier and the second circuit are disposed close to the second antenna, so that a distance between the second power amplifier and the second antenna is shortened, and losses of a signal during transmission between the second power amplifier and the second antenna are relatively small.

In a possible implementation, the first circuit includes a fifth low noise amplifier, an eleventh frequency division switch, a twelfth frequency division switch, and R filters, the second circuit further includes a sixth low noise amplifier, a thirteenth frequency division switch, a fourteenth frequency division switch, and T filters, and both R and T are natural numbers; the eleventh frequency division switch includes N+R input terminals, and the twelfth frequency division switch includes N+R input terminals; and the thirteenth frequency division switch includes M+T input terminals, and the fourteenth frequency division switch includes M+T input terminals; the fifth low noise amplifier is connected to an output terminal of the eleventh frequency division switch, one terminals of the R filters are respectively connected to the R input terminals of the eleventh frequency division switch, the other terminals of the R filters are respectively connected to the R input terminals of the twelfth frequency division switch, second terminals of the N duplexers are respectively connected to the N input terminals of the eleventh frequency division switch, third terminals of the N duplexers are respectively connected to the N input terminals of the twelfth frequency division switch, and an output terminal of the twelfth frequency division switch is connected to the first antenna; and the sixth low noise amplifier is connected to an output terminal of the thirteenth frequency division switch, one terminals of the T filters are respectively connected to the T input terminals of the thirteenth frequency division switch, the other terminals of the T filters are respectively connected to the T input terminals of the fourteenth frequency division switch, second terminals of the M duplexers are respectively connected to the M input terminals of the thirteenth frequency division switch, third terminals of the M duplexers are respectively connected to the M input terminals of the fourteenth frequency division switch, and an output terminal of the fourteenth frequency division switch is connected to the second antenna.

In this way, the terminal device can receive, by using the first circuit, a signal transmitted by the first antenna, and can transmit a signal to the first antenna for sending; or can receive, by using the second circuit, a signal transmitted by the second antenna, and can transmit a signal to the second antenna for sending.

In a possible implementation, the terminal device further includes a controller; and the controller is configured to: when a downlink reference signal received power of the first antenna is greater than or equal to a first preset value, or when the downlink reference signal received power of the first antenna is less than the first preset value, and a first value is less than or equal to a second preset value, control the first terminal of the radio frequency chip to access a channel in which the first power amplifier is located, where the first value is a difference between the downlink reference signal received power of the first antenna and a downlink reference signal received power of the second antenna; and the controller is further configured to: when the downlink reference signal received power of the first antenna is less than the first preset value, and the first value is greater than the second preset value, control the second terminal of the radio frequency chip to access a channel in which the second power amplifier is located. In this way, when the terminal device sends a signal, the controller can control the power amplifier to access the first circuit to support the first antenna to send the signal, or control the power amplifier to access the second circuit to support the second antenna to send the signal.

According to a fourth aspect, an embodiment of this application provides a control method, the method is applied to the terminal device described in any possible implementation of the third aspect, and the method includes: When a downlink reference signal received power of a first antenna is greater than or equal to a first preset value, or when the downlink reference signal received power of the first antenna is less than the first preset value, and a first value is less than or equal to a second preset value, a controller of the terminal device controls a first terminal of the radio frequency chip to access a channel in which a first power amplifier is located, where the first value is a difference between the downlink reference signal received power of the first antenna and a downlink reference signal received power of a second antenna; or when the downlink reference signal received power of the first antenna is less than the first preset value, and the first value is greater than the second preset value, the controller controls a second terminal of the radio frequency chip to access a channel in which the second power amplifier is located.

According to a fifth aspect, an embodiment of this application provides an electronic device, including a processor and a memory. The memory is configured to store code instructions, and the processor is configured to run the code instructions, to perform the method described in any possible implementation of the first aspect to the fourth aspect.

According to a sixth aspect, an embodiment of this application provides a computer-readable storage medium. The computer-readable storage medium stores a computer program or instructions. When the computer program or the instructions are run on a computer, the computer is enabled to perform the method described in any possible implementation of the first aspect to the fourth aspect.

According to a seventh aspect, an embodiment of this application provides a computer program product including a computer program. When the computer program is run on a computer, the computer is enabled to perform the method described in any possible implementation of the first aspect to the fourth aspect.

According to an eighth aspect, this application provides a chip or a chip system. The chip or the chip system includes at least one processor and a communication interface. The communication interface and the at least one processor are interconnected by using a line. The at least one processor is configured to run a computer program or instructions, to perform the method described in any possible implementation of the first aspect to the fourth aspect. The communication interface in the chip may be an input/output interface, a pin, a circuit, or the like.

In a possible implementation, the chip or the chip system described above in this application further includes at least one memory, and the at least one memory stores instructions. The memory may be a storage unit inside the chip, for example, a register or a cache, or may be a storage unit of the chip (for example, a read-only memory or a random access memory).

It should be understood that the second aspect to the eighth aspect of this application correspond to the technical solution of the first aspect of this application, and the beneficial effects achieved by each aspect and the corresponding feasible implementations are similar. Details are not described again.

### BRIEF DESCRIPTION OF DRAWINGS

FIG. 1 is a schematic diagram of locations for disposing a radio frequency front-end circuit and an antenna in a terminal device according to an embodiment of this application;
FIG. 2 is a schematic diagram 1 of a circuit of a radio frequency front-end system according to an embodiment of this application;
FIG. 3 is a schematic diagram of a location for disposing a diversity receive circuit close to a diversity antenna according to an embodiment of this application;
FIG. 4 is a schematic diagram 2 of a circuit of a radio frequency front-end system according to an embodiment of this application;
FIG. 5 is a schematic diagram of a location for disposing a radio frequency front-end circuit close to a primary antenna according to an embodiment of this application;
FIG. 6 is a schematic diagram of a structure of an electronic device according to an embodiment of this application;
FIG. 7 is a schematic diagram 1 of a circuit of a terminal device according to an embodiment of this application;
FIG. 8 is a schematic diagram of a location for disposing a second circuit close to a second antenna according to an embodiment of this application;
FIG. 9 is a schematic diagram 2 of a circuit of a terminal device according to an embodiment of this application;
FIG. 10 is a schematic diagram of locations for disposing a first circuit close to a first antenna and a second circuit close to a second antenna according to an embodiment of this application;
FIG. 11 is a schematic diagram 3 of a circuit of a terminal device according to an embodiment of this application;
FIG. 12 is a schematic diagram of locations for disposing circuit elements including two power amplifiers according to an embodiment of this application;
FIG. 13 is a schematic diagram 4 of a circuit of a terminal device according to an embodiment of this application;
FIG. 14 is a schematic flowchart of a signal sending method according to an embodiment of this application;
FIG. 15 is a schematic diagram of a hardware structure of another terminal device according to an embodiment of this application; and
FIG. 16 is a schematic diagram of a structure of a chip according to an embodiment of this application.

### DESCRIPTION OF EMBODIMENTS

In the embodiments of this application, words such as "first" and "second" are used to distinguish between same items or similar items with basically the same functions and effects. For example, a first chip and a second chip are merely intended to distinguish between different chips, and are not intended to limit a sequence of the first chip and the second chip. A person skilled in the art may understand that the words such as "first" and "second" do not limit a quantity and an execution sequence, and the words such as "first" and "second" do not indicate a definite difference.

It should be noted that the words such as "example" or "for example" in the embodiments of this application are used to indicate an example, an illustration, or a description. Any embodiment or design solution described as an "example" or "for example" in this application should not be explained as being more preferred or having more advantages than other embodiments or design solutions. Exactly, use of the word such as "example" or "for example" is intended to present a related concept in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a-b, a--c, b-c, or a-b-c, where a, b, and c may be singular or plural.

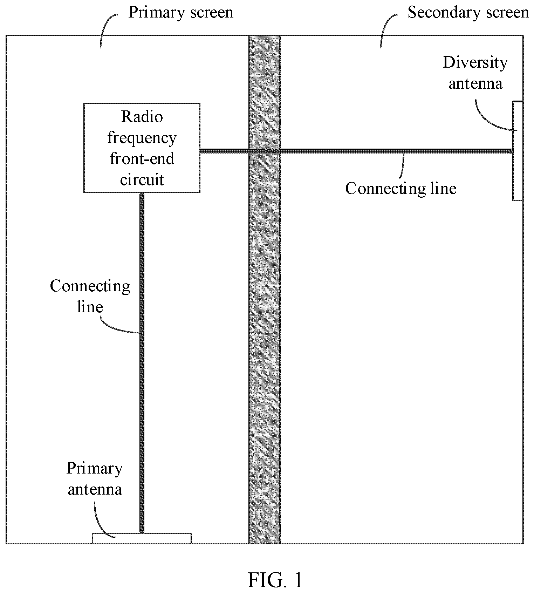

A radio frequency front-end system of a wireless communication system of a terminal device may include two parts of a radio frequency front-end circuit and an antenna. The antenna may include a primary antenna and a diversity antenna. The terminal device may implement communication by using the radio frequency front-end circuit, the primary antenna, and the diversity antenna. In some implementations, for example, the terminal device is a foldable mobile phone. FIG. 1 is a schematic diagram of locations for disposing a radio frequency front-end circuit and an antenna in a terminal device. As shown in FIG. 1, the foldable mobile phone includes two screens: a primary screen and a secondary screen. The primary antenna is disposed at a bottom of the primary screen of the terminal device. The radio frequency front-end circuit may be disposed on a PCB board (not shown in FIG. 1) of the primary screen. The diversity antenna is disposed on a right side of the secondary screen. The primary antenna is connected to the radio frequency front-end circuit by using a connecting line. The diversity antenna is connected to the radio frequency front-end circuit by using a connecting line. The connecting line may be a coaxial line, or may be a radio frequency flexible board, or a connecting line made of another material.

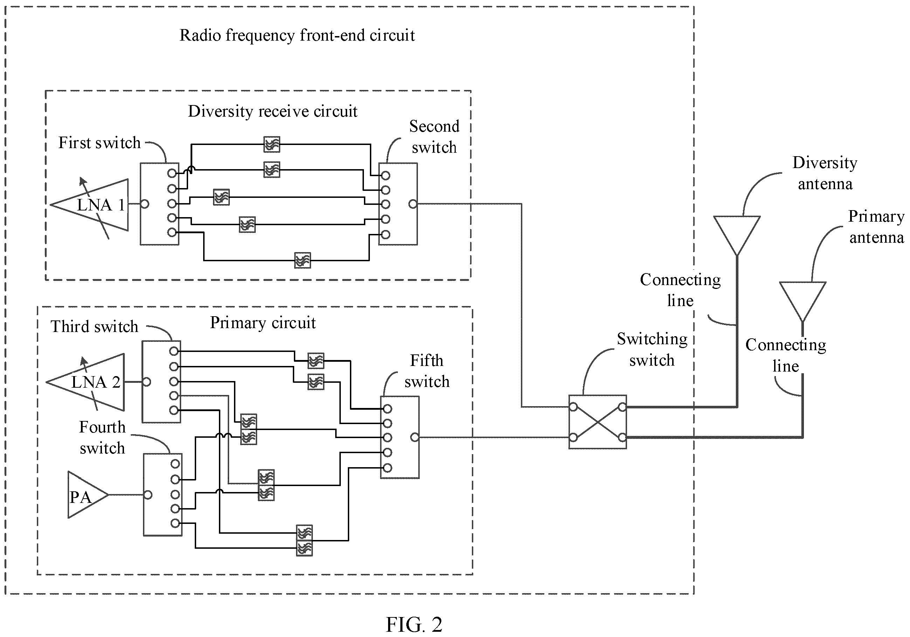

For example, the radio frequency front-end circuit in FIG. 1 may include a primary circuit, a diversity receive circuit, and an antenna switching switch. FIG. 2 is a schematic diagram 1 of a circuit of a radio frequency front-end system. As shown in FIG. 2, the diversity receive circuit in the radio frequency front-end circuit may include a low noise amplifier 1 (low noise amplifier, LNA 1), a first switch, 5 filters, and a second switch. The primary circuit may include a low noise amplifier LNA 2, a third switch, a fourth switch, a fifth switch, a power amplifier (power amplifier, PA), 2 filters, and 3 duplexers.

It may be understood that, in FIG. 2, an example in which the diversity receive circuit includes 5 filters and the primary circuit includes 2 filters and 3 duplexers is only used for description. This does not constitute a limitation on quantities of filters and duplexers.

As shown in FIG. 2, the LNA 1 is connected to an output terminal of the first switch, one terminals of the 5 filters are respectively connected to 5 input terminals of the first switch, the other terminals of the 5 filters are respectively connected to 5 output terminals of the second switch, an input terminal of the second switch is connected to a first input terminal of the antenna switching switch, and a first output terminal of the antenna switching switch is connected to the diversity antenna by using a coaxial line or a radio frequency flexible board. The LNA 2 is connected to an output terminal of the third switch, one terminals of the 2 filters are respectively connected to 2 input terminals of the third switch, the other terminals of the 2 filters are respectively connected to 2 input terminals of the fifth switch, first terminals of the 3 duplexers are respectively connected to 3 input terminals of the third switch, second terminals of the 3 duplexers are respectively connected to 3 input terminals of the fifth switch, third terminals of the 3 duplexers are respectively connected to three output terminals of the fourth switch, an output terminal of the power amplifier is connected to an input terminal of the fourth switch, an output terminal of the fifth switch is connected to a second input terminal of the antenna switching switch, and a second output terminal of the antenna switching switch is connected to the primary antenna by using a coaxial line or a radio frequency flexible board. An output terminal of a frequency division switch in FIG. 1 may also be used as an input terminal of a signal, and an input terminal thereof may also be used as an output terminal of the signal. Whether a port of the frequency division switch is an input terminal or an output terminal is related to a flow direction of a signal. The input terminal and the output terminal are not limited in the description of this embodiment of this application.

With reference to the circuit shown in FIG. 2, when the diversity antenna of the terminal device receives a signal, the diversity antenna may transmit the received signal to the diversity receive circuit by using a coaxial line or a radio frequency flexible board and the antenna switching switch. When the primary antenna of the terminal device receives a signal, the primary antenna may transmit the received signal to the primary circuit by using a coaxial line or a radio frequency flexible board and the antenna switching switch. When the terminal device sends a signal by using the primary antenna, the terminal device may control the antenna switching switch to connect the primary circuit to a channel in which the primary antenna is located, so that the signal is transmitted to the primary antenna by using the power amplifier of the primary circuit, the primary circuit, and the antenna switching switch for sending. When the terminal device sends a signal by using the diversity antenna, the terminal device may control the antenna switching switch to connect the primary circuit to a channel in which the diversity antenna is located, so that the signal is transmitted to the diversity antenna by using the power amplifier in the primary circuit, the primary circuit, and the antenna switching switch for sending.

However, in the foregoing implementation, the primary circuit supports signal receiving and sending, and the diversity receive circuit supports signal receiving. Therefore, when the terminal device sends a signal by using the primary antenna or the diversity antenna, the signal sent by the primary circuit needs to be transmitted to the primary antenna or the diversity antenna by using the antenna switching switch and a connecting line (a coaxial line, a radio frequency flexible board, or the like) for sending. The antenna switching switch and the connecting line (the coaxial line, the radio frequency flexible board, or the like) cause relatively large losses to the sent signal. In addition, when the terminal device receives a signal, the signal received by the primary antenna needs to be transmitted to the primary circuit by using a connecting line (a coaxial line, a radio frequency flexible board, or the like) and the antenna switching switch. The signal received by the diversity antenna needs to be transmitted to the diversity receive circuit by using a connecting line and the antenna switching switch. The antenna switching switch and the connecting line (the coaxial line, the radio frequency flexible board, or the like) cause relatively large losses to the received signal. Therefore, when signal transmission is performed in the circuit of the radio frequency front-end system in the foregoing implementation, there are relatively large signal losses, and consequently, signal transmission efficiency is relatively low.

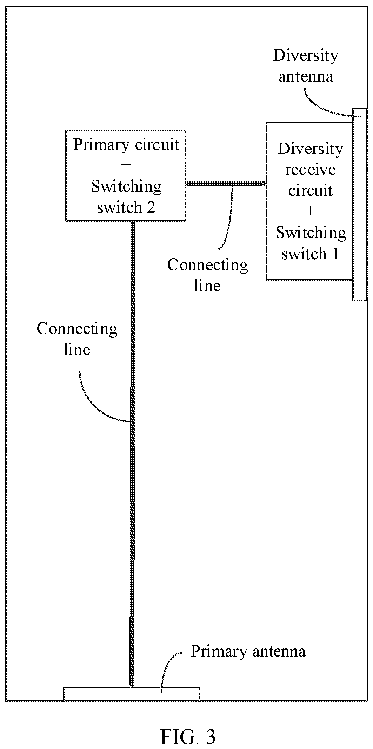

In some other implementations, to shorten a distance between the diversity receive circuit and the diversity antenna in the radio frequency front-end circuit, and reduce line losses between the diversity receive circuit and the diversity antenna in the radio frequency front-end circuit, the diversity receive circuit may be disposed close to the diversity antenna. As shown in FIG. 3, FIG. 3 is a schematic diagram of a location for disposing a diversity receive circuit close to a diversity antenna according to an embodiment of this application. As shown in FIG. 3, a primary circuit and an antenna switching switch 2 are disposed on a PCB board (not shown in FIG. 3) of a terminal device, a primary antenna is disposed at a bottom of a screen, a diversity antenna is disposed on a right side of the screen, and a diversity receive circuit and an antenna switching switch 1 are disposed close to the diversity antenna.

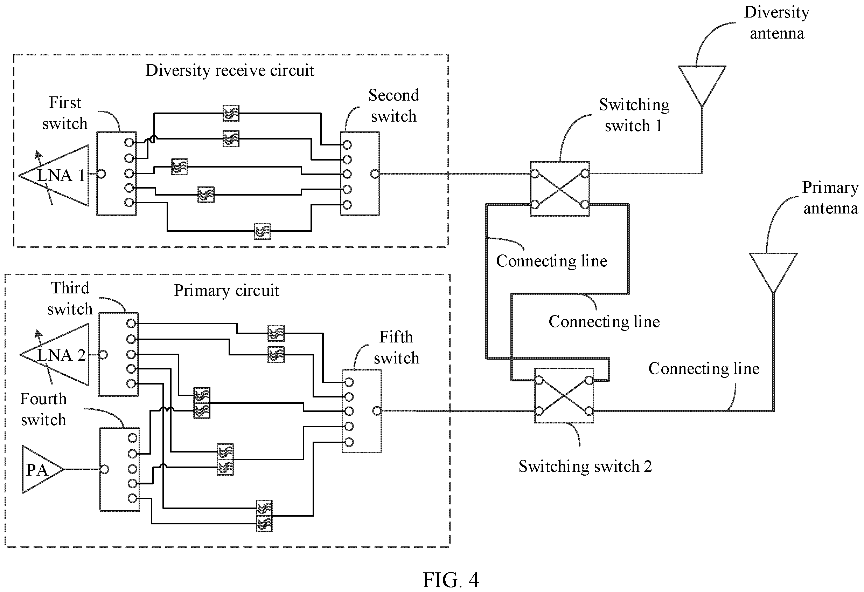

With reference to FIG. 3, FIG. 4 is a schematic diagram 2 of a circuit of a radio frequency front-end system. As shown in FIG. 4, a terminal device may include a primary circuit, a diversity receive circuit, an antenna switching switch 1, and an antenna switching switch 2. The diversity receive circuit may include a low noise amplifier 1 (low noise amplifier, LNA), a first switch, 5 filters, and a second switch. The primary circuit may include a low noise amplifier LNA 2, a third switch, a fourth switch, a fifth switch, a power amplifier (power amplifier, PA), 2 filters, and 3 duplexers.

As shown in FIG. 4, an output terminal of a second switch in the diversity receive circuit is connected to a first input terminal of the antenna switching switch 1, an output terminal of a fifth switch in the primary circuit is connected to a second input terminal of the antenna switching switch 2, a second input terminal of the antenna switching switch 1 is connected to a first output terminal of the antenna switching switch 1 by using a connecting line (such as a thick solid line in FIG. 4), the first output terminal of the antenna switching switch 1 is connected to the diversity antenna, a second output terminal of the antenna switching switch 1 is connected to the second input terminal of the antenna switching switch 2 by using a coaxial line or a radio frequency flexible board, and a second output terminal of the antenna switching switch 2 is connected to the primary antenna by using a connecting line (such as a thick solid line in FIG. 4). The connecting line may be a coaxial line or a radio frequency flexible board. A connection between elements in the primary circuit and the diversity receive circuit is similar to that in FIG. 2. Refer to related descriptions in FIG. 2. Details are not described herein again. An output terminal of a frequency division switch in FIG. 4 may also be used as an input terminal of a signal, and an input terminal thereof may also be used as an output terminal of the signal. Whether a port of the frequency division switch is an input terminal or an output terminal is related to a flow direction of a signal. The output terminal and the input terminal are not limited in the description of this embodiment of this application.

With reference to the circuit shown in FIG. 4, when the diversity antenna of the terminal device receives a signal, the diversity antenna may transmit the received signal to the diversity receive circuit by using the antenna switching switch 1, a connecting line (a connecting line between the two antenna switching switches), and the antenna switching switch 2. When the primary antenna of the terminal device receives a signal, the primary antenna may input the received signal to the primary circuit by using a connecting line (a connecting line between the primary antenna and the antenna switching switch 2), the antenna switching switch 2, the connecting line (the connecting line between the two antenna switching switches), and the antenna switching switch 1. When the terminal device sends a signal by using the primary antenna, the signal sent by the power amplifier is transmitted to the primary antenna by using the primary circuit, the antenna switching switch 2, and the connecting line (the connecting line between the primary antenna and the antenna switching switch 2) for sending. When the terminal device sends a signal by using the diversity antenna, the signal sent by the power amplifier is transmitted to the diversity antenna by using the primary circuit, the antenna switching switch 2, the connecting line (the connecting line between the two antenna switching switches), and the antenna switching switch 1 for sending. The antenna switching switch 1 and the antenna switching switch 2 are configured to control signal sending by using the primary antenna or the diversity antenna.

In the foregoing implementation, when the diversity receive circuit is disposed close to the diversity antenna, the connecting line between the antenna switching switch 1 and the antenna switching switch 2 presents an intersecting state. In this case, a signal received by the primary antenna, a signal received by the diversity antenna, and a signal sent by the diversity antenna all need to pass through the two antenna switching switches. In a signal transmission process, there are still relatively large losses, and signal transmission efficiency is relatively low.

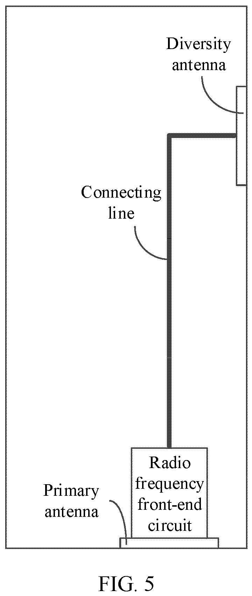

In still another possible implementation, to shorten a distance between the primary circuit and the primary antenna in the radio frequency front-end circuit, and reduce losses of receiving a signal, the radio frequency front-end circuit may be disposed close to the primary antenna. As shown in FIG. 5, FIG. 5 is a schematic diagram of a location for disposing a radio frequency front-end circuit close to a primary antenna according to an embodiment of this application. As shown in FIG. 5, the primary antenna is disposed at a bottom of a screen, the radio frequency front-end circuit is disposed close to the primary antenna, and a diversity antenna is disposed on a right side of the screen. The diversity antenna is connected to the radio frequency front-end circuit by using a coaxial line or a radio frequency flexible board.

However, the primary circuit supports signal receiving and sending, and the diversity receive circuit supports signal receiving. The radio frequency front-end circuit is disposed close to the primary antenna. When sending a signal, the terminal device still needs to control the antenna switching switch in the radio frequency front-end circuit. In this case, the primary circuit accesses a channel in which the primary antenna is located or a channel in which the diversity antenna is located, and signal receiving and sending still need to pass through the antenna switching switch. In addition, disposing the radio frequency front-end circuit close to the primary antenna increases a distance between the diversity receive circuit and the diversity antenna, and consequently, losses of signals received and sent by the diversity antenna are relatively large. Therefore, when the radio frequency front-end circuit is disposed close to the primary antenna, there is still a problem that signal transmission losses are relatively large and transmission efficiency is relatively low.

In view of this, an embodiment of this application provides a terminal device. The terminal device includes a first circuit and a second circuit. Both the first circuit and the second circuit include a plurality of duplexers, so that both the first circuit and the second circuit can support signal sending and receiving. In this way, there is no need to dispose an antenna switching switch after the first circuit or the second circuit. A power amplifier can be multiplexed, so that when the power amplifier accesses the first circuit, the terminal device can support, by using the first circuit, the first antenna to send a signal, or when the power amplifier accesses the second circuit, the terminal device can support, by using the second circuit, the second antenna to send a signal. In this way, when a signal is transmitted between the first circuit and the first antenna, the signal does not need to pass through the antenna switching switch. When a signal is transmitted between the second circuit and the second antenna, the signal does not need to pass through the antenna switching switch. Therefore, there are relatively small losses in a signal transmission process, and signal transmission efficiency can be improved.

For example, the terminal device in this embodiment of this application may also be an electronic device in any form. For example, the electronic device may include a handheld device with an image processing function, an onboard device, or the like. For example, some electronic devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an onboard device, a wearable device, a terminal device in a 5G network, a terminal device in a future evolved public land mobile network (public land mobile network, PLMN), and the like. This is not limited in the embodiments of this application.

As an example rather than a limitation, in embodiments of this application, the electronic device may alternatively be a wearable device. The wearable device may also be referred to as a wearable smart device, and is a generic term for wearable devices such as glasses, gloves, watches, clothing, and shoes that are intelligently designed and developed from daily wear by using wearable technologies. The wearable device is a portable device that is worn directly on a body or integrated into clothing or accessories of a user. The wearable device is not merely a hardware device, but can implement powerful functions through software support, data interaction, and cloud interaction. In a broad sense, the wearable smart device includes a full-featured and large-size device that can implement all or some of functions without relying on a smartphone, for example a smartwatch or smart glasses, and a device that focuses only on a specific type of application function and needs to be used together with another device such as a smartphone, for example, various types of smart bands and smart jewelry that monitor physical signs.

In addition, in the embodiments of this application, the electronic device may also be a terminal device in an internet of things (internet of things, IoT) system. IoT is an important part in future development of information technologies, and a main technical feature thereof is connecting a thing to a network through a communication technology, to implement an intelligent network of human-machine interconnection and interconnection between things.

The electronic device in the embodiments of this application may also be referred to as a terminal device, user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

In the embodiments of this application, the electronic device or each network device includes a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as a browser, an address book, word processing software, and instant messaging software.

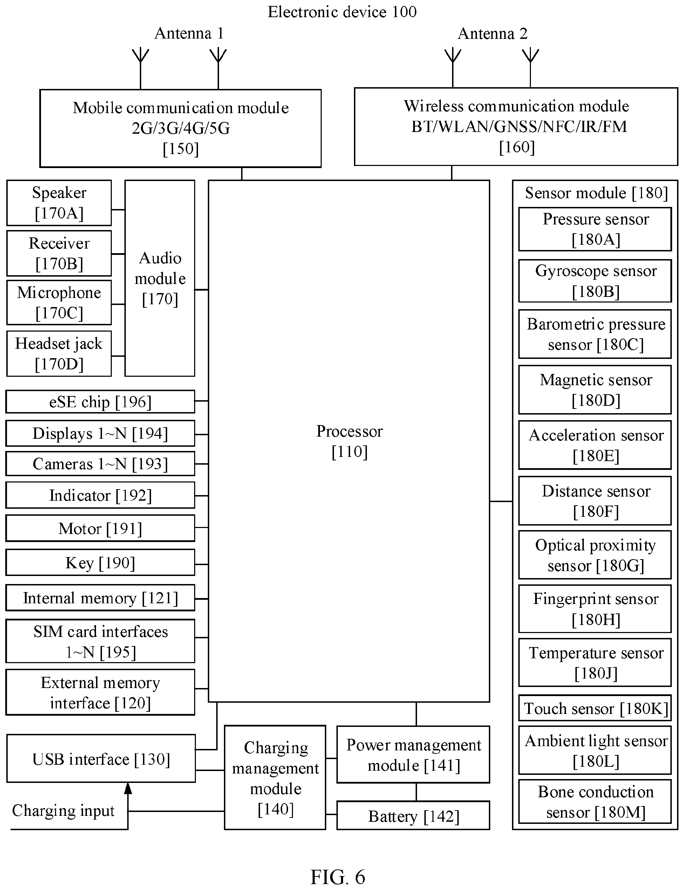

For example, FIG. 6 is a schematic diagram of a structure of an electronic device.

The electronic device may include a processor 110, an external memory interface 120, an internal memory 121, a universal serial bus (universal serial bus, USB) interface 130, a pogo pin connector interface 131, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction fetching and instruction execution.

A memory may be further disposed in the processor 110 to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL).

It may be understood that an interface connection relationship between the modules illustrated in this embodiment of the present invention is an example for description, and does not constitute a limitation on the structure of the electronic device. In some other embodiments of this application, the electronic device may alternatively use an interface connection manner different from that in the foregoing embodiment, or use a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a solution applied to the electronic device 100 for wireless communication including 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution to wireless communication that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various function applications and data processing of the electronic device by running the instructions stored in the internal memory 121 and/or the instructions stored in the memory disposed in the processor.

A software system of the electronic device 100 may use a layered architecture, an event-driven architecture, a microkernel architecture, a microservice architecture, or a cloud architecture. The software system of the electronic device is not limited in this embodiment of this application.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

For example, a terminal device may include a first circuit, a second circuit, a first antenna, a second antenna, a first frequency division switch, and a second frequency division switch. The first circuit may include N duplexers, and the second circuit may include M duplexers. The first frequency division switch includes N first output terminals, and the second frequency division switch includes M output terminals. Both N and M are natural numbers, and N and M are not specifically limited in this embodiment of this application.

First terminals of the N duplexers are respectively connected to the N first output terminals of the first frequency division switch, and first terminals of the M duplexers are respectively connected to the M output terminals of the second frequency division switch. The first antenna is connected to the first circuit, and the second antenna is connected to the second circuit.

Both the first circuit and the second circuit include a plurality of duplexers, the first antenna is connected to the first circuit, and the second antenna is connected to the second circuit. Therefore, the terminal device can receive or send, by using the first circuit, a signal passing through the first antenna, and can receive or send, by using the second circuit, a signal passing through the second antenna.

For example, the terminal device may include a power amplifier, and the power amplifier may access the first circuit to support the first antenna to send a signal, or access the second circuit to support the second antenna to send a signal.

In this way, the first circuit paired with the first antenna for use and the second circuit paired with the second antenna for use are disposed in the terminal device, so that a signal received by the first antenna can be transmitted to the first circuit, and a signal received by the second antenna can be transmitted to the second circuit. In addition, the power amplifier in the terminal device may be multiplexed. When the terminal device sends a signal by using the first antenna, the power amplifier accesses the first circuit. When the terminal device sends a signal by using the second antenna, the power amplifier accesses the second circuit. In this way, there is no need to dispose an antenna switching switch after the first circuit and the second circuit, which can reduce losses of signals when the signals are transmitted between the first circuit and the first antenna and between the second circuit and the second antenna, thereby improving signal transmission efficiency.

For example, there are two possible implementations of multiplexing the power amplifier by the terminal device. In one possible implementation, the power amplifier may be connected to an input terminal of the first frequency division switch, and an input terminal of the second frequency division switch is connected to one of the output terminals of the first frequency division switch, so that a first power amplifier can access the first circuit by using the first frequency division switch, or access, by using an output terminal that is of the first frequency division switch and that is connected to the second frequency division switch, the second circuit connected to the second frequency division switch. In this possible implementation, the second circuit may be disposed at a location close to the second antenna.

In the other possible implementation, a selection switch may be disposed in the terminal device, the power amplifier may be connected to an input terminal of the selection switch, and two output terminals of the selection switch may be respectively connected to the first frequency division switch and the second frequency division switch, so that the terminal device can enable, by using the output terminal of the selection switch, the power amplifier to access the first circuit connected to the first frequency division switch or to access the second circuit connected to the second frequency division switch. In this possible implementation, the first circuit may be disposed at a location close to the first antenna, and the second circuit may be disposed at a location close to the second antenna.

The following describes the two possible implementations of multiplexing the power amplifier by using a specific embodiment.

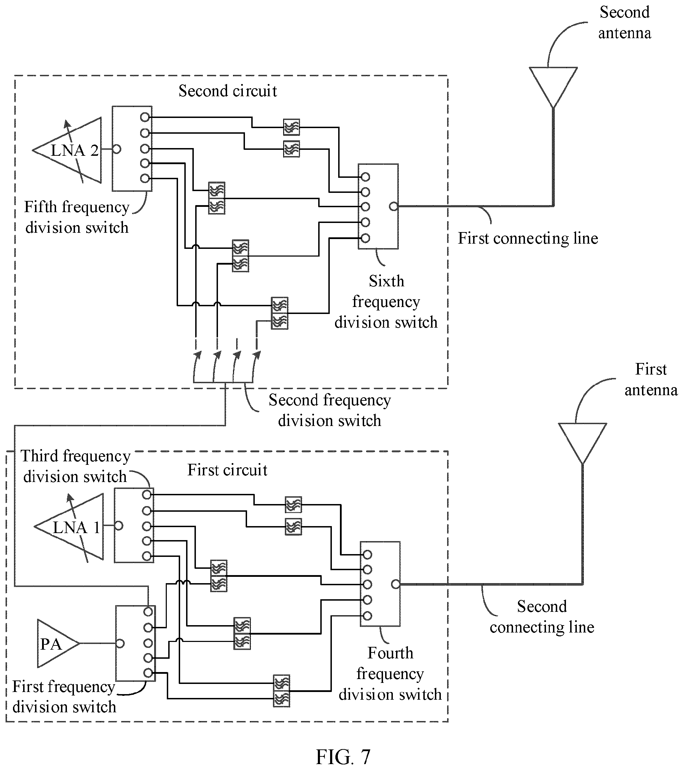

In one possible implementation, the second frequency division switch may include a second output terminal, and the terminal device may multiplex the power amplifier by using the second output terminal of the second frequency division switch. Referring to FIG. 7, FIG. 7 is a schematic diagram 1 of a circuit of a terminal device according to an embodiment of this application. As shown in FIG. 7, the circuit may include the power amplifier PA, the first circuit, the second circuit, the first frequency division switch, the second frequency division switch, a first connecting line (a thick solid line in FIG. 7), a second connecting line (a thick solid line in FIG. 7), the first antenna, and the second antenna. The first circuit may include a first noise amplifier LNA 1, 2 filters, 3 duplexers, a third frequency division switch, and a fourth frequency division switch. The second circuit may include a second noise amplifier LNA 2, 2 filters, 3 duplexers, a fifth frequency division switch, and a sixth frequency division switch.

For example, the first connecting line may be a coaxial line or a radio frequency flexible board, and the second connecting line may be a coaxial line or a radio frequency flexible board. The first connecting line and the second connecting line are not specifically limited in this embodiment of this application.

As shown in FIG. 7, in the first circuit, the first low noise amplifier LNA 1 is connected to an output terminal of the third frequency division switch, one terminals of the 2 filters are respectively connected to 2 input terminals of the third frequency division switch, the other terminals of the 2 filters are respectively connected to 2 input terminals of the fourth frequency division switch, first terminals of the 3 duplexers are respectively connected to 3 output terminals of the first frequency division switch, second terminals of the 3 duplexers are respectively connected to 3 input terminals of the third frequency division switch, third terminals of the 3 duplexers are respectively connected to 3 input terminals of the fourth frequency division switch, an output terminal of the fourth frequency division switch is connected to one end of the second connecting line, and the other end of the second connecting line is connected to the first antenna.

In the second circuit, the second low noise amplifier LNA 2 is connected to an input terminal of the fifth frequency division switch, one terminals of the 2 filters are respectively connected to 2 input terminals of the fifth frequency division switch, the other terminals of the 2 filters are respectively connected to 2 input terminals of the sixth frequency division switch, first terminals of the 3 duplexers are respectively connected to 3 first output terminals of the second frequency division switch, second terminals of the 3 duplexers are respectively connected to 3 input terminals of the fifth frequency division switch, third terminals of the 3 duplexers are respectively connected to 3 input terminals of the 3 sixth frequency division switch, an output terminal of the sixth frequency division switch is connected to one end of the first connecting line, and the other end of the first connecting line is connected to the second antenna. The power amplifier PA is connected to the input terminal of the first frequency division switch, and a second output terminal of the first frequency division switch is connected to the input terminal of the second frequency division switch.

It may be understood that the output terminal of the frequency division switch in FIG. 7 may also be used as an input terminal of a signal, and the input terminal thereof may also be used as an output terminal of the signal. Whether a port of the frequency division switch is an input terminal or an output terminal is related to a flow direction of a signal. The output terminal and the input terminal are not limited in the description of this embodiment of this application.

In the circuit shown in FIG. 7, an example in which 2 filters and 3 duplexers are included in the first circuit, and 2 filters and 3 duplexers are included in the second circuit is only used for description. This does not constitute a limitation on the filter and the duplexer in the terminal device. Frequency division switches in a plurality of frequency division switches in FIG. 7 correspond to signals of different frequency bands. For example, 3 first output terminals of the first frequency division switch correspond to signals of 3 different frequency bands, that is, signals of different frequency bands are output by using different output terminals.

For example, in the circuit shown in FIG. 7, when the first antenna of the terminal device receives a signal, the first antenna may transmit the received signal to the first circuit by using the second connecting line. When the second antenna of the terminal device receives a signal, the second antenna may transmit the received signal to the second circuit by using the first connecting line. When the terminal device needs to send a signal by using the first antenna, the power amplifier may access the first circuit by using any first output terminal of the first frequency division switch, so that a signal output by the power amplifier is transmitted to the first antenna by using the first circuit and the second connecting line for sending. When the terminal device needs to send a signal by using the second antenna, the power amplifier may be connected to the second frequency division switch by using the second output terminal of the first frequency division switch, so that the power amplifier accesses the second circuit by using the second frequency division switch, and a signal output by the power amplifier is transmitted to the second antenna by using the second circuit and the first connecting line for sending.

In this way, by multiplexing the power amplifier, the terminal device can enable the power amplifier to access the first circuit to support the first antenna to send a signal, or enable the power amplifier to access the second circuit to support the second antenna to send a signal. In this case, the signal can be transmitted between the first circuit and the first antenna by using the second connecting line, or can be transmitted between the second circuit and the second antenna by using the first connecting line, thereby reducing losses in a signal transmission process and improving signal transmission efficiency.

It may be understood that, in the foregoing circuit shown in FIG. 7, the power amplifier PA, the first circuit, the second circuit, the first frequency division switch, and the second frequency division switch may be disposed on a PCB board of the terminal device, for example, may be disposed at a location at which the radio frequency front-end circuit in FIG. 1 is located. In this embodiment of this application, the second circuit may be disposed at a location close to the second antenna, so that a distance between the second antenna and the second circuit is relatively close, which can reduce losses of a signal when the signal is transmitted between the second circuit and the second antenna.

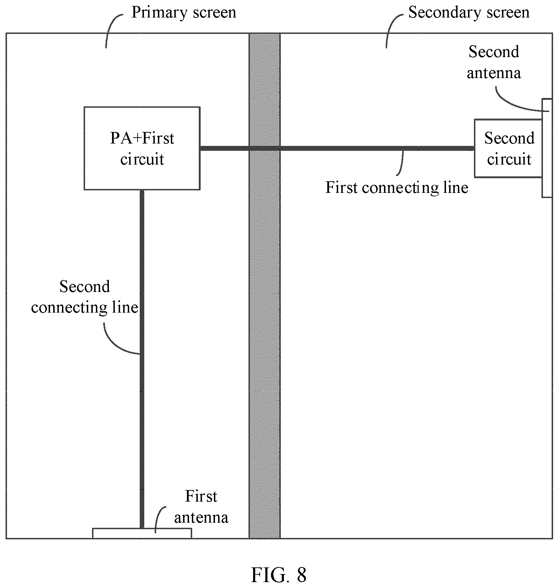

For example, when the second circuit is disposed at a location close to the second antenna, for locations of the power amplifier PA, the first circuit, the second circuit, the first antenna, and the second antenna in the terminal device, refer to FIG. 8. FIG. 8 is a schematic diagram of a location for disposing a second circuit close to a second antenna according to an embodiment of this application. FIG. 8 is described merely by using an example in which the terminal device is a foldable mobile phone. This does not constitute a limitation on the terminal device.

As shown in FIG. 8, the first antenna is disposed at a bottom of a primary screen of the terminal device, the power amplifier PA and the first circuit may be disposed on a PCB board (not shown in FIG. 1) of the primary screen, and the second antenna is disposed on a right side of a secondary screen. The first power amplifier is connected to the second circuit by using the first connecting line, and the first circuit is connected to the first antenna by using the second connecting line. The connecting line may be a coaxial line, or may be a radio frequency flexible board, or a connecting line made of another material.

For example, in FIG. 8, a distance between a location at which the second circuit is disposed and the second antenna may be less than a preset distance. The preset distance may be a relatively small value. This is not limited in this embodiment of this application.

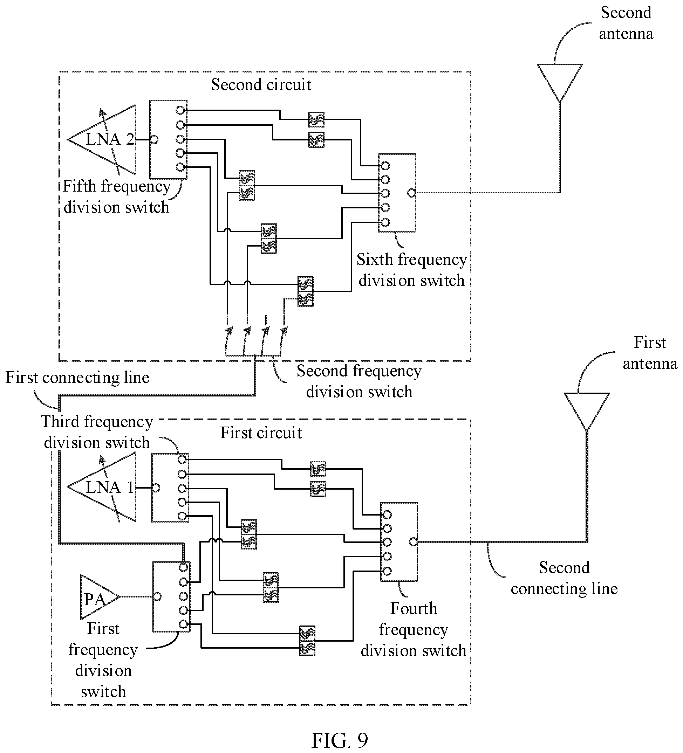

With reference to the schematic diagram of the location shown in FIG. 8, FIG. 9 is a schematic diagram 2 of a circuit of a terminal device.

As shown in FIG. 9, the circuit may include the power amplifier PA, the first circuit, the second circuit, the first frequency division switch, the second frequency division switch, a first connecting line, a second connecting line, the first antenna, and the second antenna. The first circuit may include a first noise amplifier LNA 1, 2 filters, 3 duplexers, a third frequency division switch, and a fourth frequency division switch. The second circuit may include a second noise amplifier LNA 2, 2 filters, 3 duplexers, a fifth frequency division switch, and a sixth frequency division switch.

The second circuit in FIG. 7 is disposed at a location away from the second antenna, and the second circuit is connected to the second antenna by using the first connecting line, while the second circuit in FIG. 9 is disposed at a location close to the second antenna, and the first antenna in FIG. 9 may be configured to connect the second circuit and the power amplifier. Therefore, a difference between the circuit shown in FIG. 9 and the circuit shown in FIG. 7 includes: A second output terminal of the first frequency division switch is connected to one end of the first connecting line, and the other end of the first connecting line is connected to the input terminal of the second frequency division switch. An output terminal of the sixth frequency division switch is connected to the second antenna. A connection manner between other circuit elements in FIG. 9 is the same as that in FIG. 7. Details are not described herein again.

For example, in the circuit shown in FIG. 9, when the first antenna of the terminal device receives a signal, the first antenna may transmit the received signal to the first circuit by using the second connecting line. When the second antenna of the terminal device receives a signal, the first antenna may transmit the received signal to the second circuit. When the terminal device sends a signal by using the first antenna, the power amplifier may access the first circuit by using any first output terminal of the first frequency division switch, so that a signal output by the power amplifier is transmitted to the first antenna by using the first circuit and the second connecting line for sending. When the terminal device needs to send a signal by using the second antenna, the power amplifier may be connected to the second frequency division switch by using the second output terminal of the first frequency division switch and the first connecting line, so that the power amplifier accesses the second circuit, and a signal output by the power amplifier is transmitted to the second antenna by using the first connecting line and the second circuit for sending.

In this way, by disposing the second circuit at a location close to the second antenna, a distance between the second circuit and the second antenna is shortened, so that losses of a signal during transmission between the second circuit and the second antenna are relatively small, and signal transmission efficiency can be improved.

The foregoing describes a manner in which the terminal device multiplexes the power amplifier by using the second output terminal of the first frequency division switch. The following describes a manner in which the terminal device multiplexes the power amplifier by switching a switch.

In another possible implementation, the terminal device may multiplex the power amplifier by switching the switch. In this possible implementation, the first circuit may be disposed at a location close to the first antenna, so that a distance between the first circuit and the first antenna is relatively close, and a distance over which a signal is transmitted between the first circuit and the first antenna can be shortened. In addition, the second circuit may be disposed at a location close to the second antenna, so that a distance between the second circuit and the second antenna is relatively close, and a distance over which a signal is transmitted between the second circuit and the second antenna can be shortened.

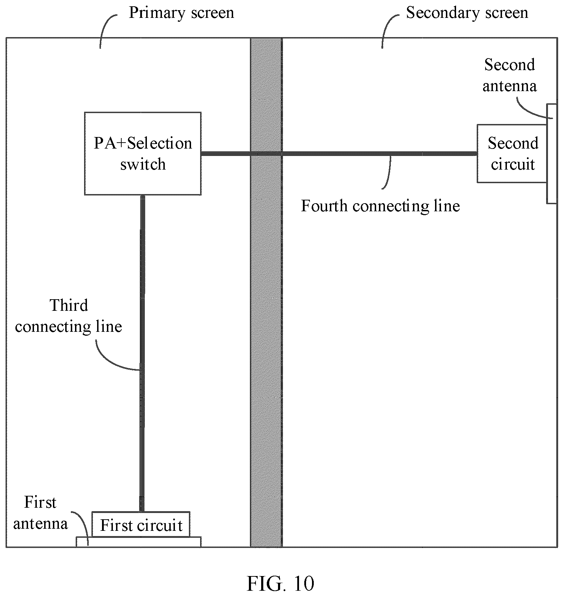

For example, FIG. 10 is a schematic diagram of locations for disposing a first circuit close to a first antenna and a second circuit close to a second antenna. FIG. 10 is described merely by using an example in which the terminal device is a foldable mobile phone. This does not constitute a limitation on the terminal device.

As shown in FIG. 10, the first antenna is disposed at a bottom of a primary screen of the terminal device, the second antenna is disposed on a right side of a secondary screen, and the power amplifier PA and the selection switch are disposed in an upper middle of the primary screen. The first circuit is disposed at a location close to the first antenna, the first circuit is connected to the switching switch by using a third connecting line, the second circuit is disposed at a location close to the second antenna, and the second circuit is connected to the switching switch by using a fourth connecting line.

For example, in the circuit shown in FIG. 10, a distance between a location at which the first circuit is disposed and the first antenna may be less than a preset distance, and a distance between a location at which the second circuit is disposed and the second antenna may be less than a preset distance. The preset distance may be a relatively small value. The preset distance is not limited in this embodiment of this application.

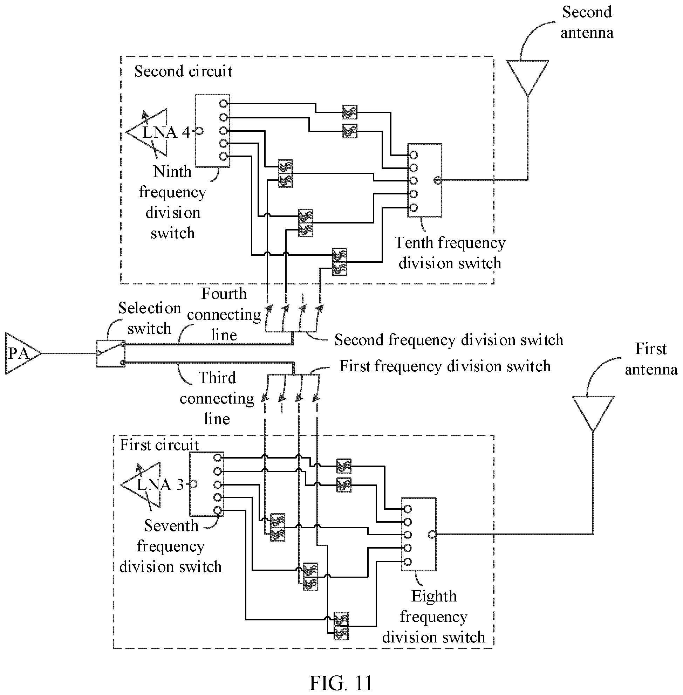

With reference to the location shown in FIG. 10, when the first circuit is disposed close to the first antenna and the second circuit is disposed close to the second antenna, for a circuit in the terminal device, refer to FIG. 11. FIG. 11 is a schematic diagram 3 of a circuit of a terminal device according to an embodiment of this application.

As shown in FIG. 11, the circuit may include the power amplifier PA, the selection switch, the third connecting line, the fourth connecting line, the first circuit, the second circuit, the first antenna, and the second antenna. The first circuit may include a third noise amplifier LNA 3, 2 filters, 3 duplexers, a seventh frequency division switch, and an eighth frequency division switch. The second circuit may include a fourth noise amplifier LNA 4, 2 filters, 3 duplexers, a ninth frequency division switch, and a tenth frequency division switch.

As shown in FIG. 11, the power amplifier is connected to a first terminal of the selection switch, a second terminal of the selection switch is connected to one end of the third connecting line, the other end of the third connecting line is connected to an input terminal of the first frequency division switch, a third terminal of the selection switch is connected to one end of the fourth connecting line, and the other end of the fourth connecting line is connected to an input terminal of the second frequency division switch.

In the first circuit, the third low noise amplifier LNA 3 is connected to an output terminal of the seventh frequency division switch, one terminals of the 2 filters are respectively connected to 2 input terminals of the seventh frequency division switch, and the other terminals of the 2 filters are respectively connected to 2 input terminals of the eighth frequency division switch. First terminals of the 3 duplexers are respectively connected to 3 output terminals of the first frequency division switch, second terminals of the 3 duplexers are respectively connected to 3 input terminals of the seventh frequency division switch, third terminals of the 3 duplexers are respectively connected to 3 input terminals of the eighth frequency division switch, and an output terminal of the eighth frequency division switch is connected to the first antenna.

In the second circuit, the fourth low noise amplifier LNA 4 is connected to an output terminal of the ninth frequency division switch, one terminals of the 2 filters are respectively connected to 2 input terminals of the ninth frequency division switch, the other terminals of the 2 filters are respectively connected to 2 input terminals of the tenth frequency division switch, first terminals of the 3 duplexers are respectively connected to 3 output terminals of the second frequency division switch, second terminals of the 3 duplexers are respectively connected to 3 input terminals of the ninth frequency division switch, third terminals of the 3 duplexers are respectively connected to 3 input terminals of the tenth frequency division switch, and an output terminal of the tenth frequency division switch is connected to the second antenna.

It may be understood that the output terminal of the frequency division switch in FIG. 11 may also be used as an input terminal of a signal, and the input terminal thereof may also be used as an output terminal of the signal. Whether a port of the frequency division switch is an input terminal or an output terminal is related to a flow direction of a signal. The output terminal and the input terminal are not limited in the description of this embodiment of this application.

For example, as shown in FIG. 11, the first circuit and the second circuit have a same composition. Therefore, when the first circuit and the second circuit are disposed in the terminal device, circuit elements of a same type can be used.

For example, when the first antenna of the terminal device receives a signal, the first antenna may transmit the received signal to the first circuit. When the second antenna of the terminal device receives a signal, the second antenna may transmit the received signal to the second circuit. When the terminal device needs to send a signal by using the first antenna, the power amplifier may access the first circuit by using the selection switch and any first output terminal of the first frequency division switch, so that a signal output by the power amplifier is transmitted to the first antenna by using the switching switch, the third connecting line, and the first circuit for sending. When the terminal device needs to send a signal by using the second antenna, the power amplifier may access the second circuit by using the selection switch and any output terminal of the second frequency division switch, so that a signal output by the power amplifier is transmitted to the second antenna by using the selection switch, the fourth connecting line, and the second circuit for sending.

In this way, by disposing the first circuit at a location close to the first antenna, a distance over which a signal is transmitted between the first antenna and the first circuit is shortened, and losses of the signal during transmission between the first antenna and the first circuit are reduced. By disposing the second circuit at a location close to the second antenna, a distance over which a signal is transmitted between the second antenna and the second circuit is shortened, and losses of the signal during transmission between the second antenna and the second circuit are reduced. Therefore, disposing the first circuit close to the first antenna and the second circuit close to the second antenna can reduce signal transmission losses and improve signal transmission efficiency.

For example, the terminal device may further include a radio frequency chip (not shown in the foregoing embodiments). When the terminal device sends a signal, the radio frequency chip may send the signal to the power amplifier, and the power amplifier may process a received signal, and send a processed signal by using the first antenna or the second antenna. The signal output by the radio frequency chip is a small signal and needs to be amplified by the power amplifier.

In a same transmission condition, losses of a small signal in a transmission process are less than losses of a large signal in the transmission process. Therefore, two power amplifiers can be disposed in the terminal device, and the two power amplifiers are separately connected to the radio frequency chip by using a coaxial line or a radio frequency flexible board. In this way, the small signal sent by the radio frequency chip is transmitted to the power amplifier by using the coaxial line or the radio frequency flexible board, and in comparison with a transmission manner in which the large signal processed by the power amplifier passes through the coaxial line or the radio frequency flexible board, signal losses are relatively small.

For example, when a terminal device includes two power amplifiers, the terminal device may include a radio frequency chip, a fifth connecting line, a sixth connecting line, a first power amplifier, a second power amplifier, a first circuit, a second circuit, a first antenna, a second antenna, a first frequency division switch, and a second frequency division switch.

The first circuit may include N duplexers, and the second circuit may include M duplexers. The first frequency division switch includes N output terminals, and the second frequency division switch includes M first output terminals. Both N and M are natural numbers, and values of N and M are not limited in an embodiment of this application.

For example, a first terminal of the radio frequency chip may be connected to one end of the fifth connecting line, the other end of the fifth connecting line may be connected to an input terminal of the first power amplifier, an output terminal of the first power amplifier may be connected to an input terminal of the first frequency division switch, and first terminals of the N duplexers are respectively connected to the N output terminals of the first frequency division switch. A second terminal of the radio frequency chip is connected to one end of the sixth connecting line, the other end of the sixth connecting line is connected to an input terminal of the second power amplifier, an output terminal of the second power amplifier is connected to an input terminal of the second frequency division switch, and first terminals of the M duplexers are respectively connected to the M output terminals of the second frequency division switch. The first antenna is connected to the first circuit, and the second antenna is connected to the second circuit.

Based on the foregoing connection manner, the first power amplifier may access the first circuit to support the first antenna to send a signal. The second power amplifier may access the second circuit to support the second antenna to send a signal.

For example, when the terminal device includes the two power amplifiers, the first power amplifier and the first circuit in the terminal device may be disposed at a location close to the first antenna, and the second power amplifier and the second circuit may be disposed at a location close to the second antenna. In this way, a distance between the first antenna and the first circuit can be shortened, a distance between the second antenna and the second circuit can be shortened, a distance between the first power amplifier and the first circuit can be shortened, and a distance between the second power amplifier and the second circuit can be shortened. Therefore, losses of a signal when the signal is transmitted among the first power amplifier, the first circuit, and the first antenna are relatively small, losses of a signal when the signal is transmitted among the second power amplifier, the second circuit, and the second antenna are relatively small, and signal transmission efficiency can be improved.

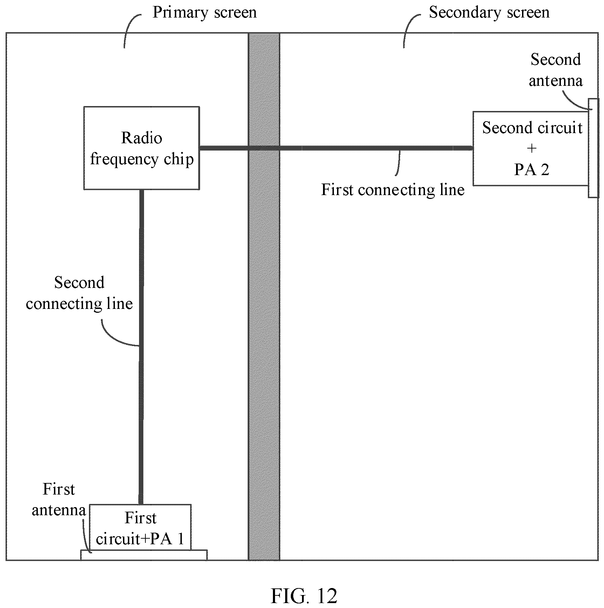

FIG. 12 is a schematic diagram of locations for disposing circuit elements including two power amplifiers. FIG. 12 is described merely by using an example in which the terminal device is a foldable mobile phone. This does not constitute a limitation on the terminal device.

As shown in FIG. 12, the first antenna is disposed at a bottom of a primary screen of the terminal device, the second antenna is disposed on a right side of a secondary screen, and the radio frequency chip RFIC is disposed in an upper middle of the primary screen of the terminal device. The first circuit and the first power amplifier are disposed at a location close to the first antenna, and the second circuit and the second power amplifier are disposed at a location close to the second antenna.

In FIG. 12, a distance between a location at which the first circuit is disposed and the first antenna may be less than a preset distance, a distance between a location at which the second circuit is disposed and the second antenna may be less than the preset distance, a distance between a location of the first power amplifier and the first circuit may be less than the preset distance, and a distance between a location of the second power amplifier and the second circuit may be less than the preset distance. The preset distance may be a relatively small value. The preset distance is not limited in this embodiment of this application.

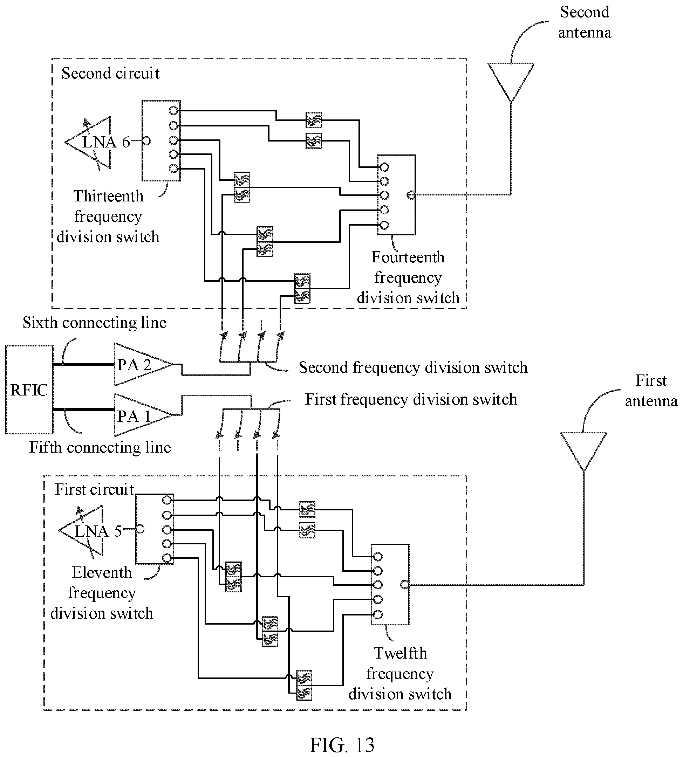

With reference to the locations for disposing the circuit elements in the terminal device shown in FIG. 12, FIG. 13 is a schematic diagram 4 of a circuit of a terminal device according to an embodiment of this application. As shown in FIG. 13, the circuit includes the first power amplifier PA 1, the second power amplifier PA, the fifth connecting line, the sixth connecting line, the first circuit, the second circuit, the first antenna, and the second antenna. The first circuit may include a fifth noise amplifier LNA 5, 2 filters, 3 duplexers, an eleventh frequency division switch, and a twelfth frequency division switch. The second circuit may include a sixth noise amplifier LNA 6, 2 filters, 3 duplexers, a thirteenth frequency division switch, and a fourteenth frequency division switch.

As shown in FIG. 13, a first terminal of the radio frequency chip is connected to one end of the fifth connecting line, the other end of the fifth connecting line is connected to an input terminal of the first power amplifier PA 1, a second terminal of the radio frequency chip is connected to one end of the sixth connecting line, and the other end of the sixth connecting line is connected to an input terminal of the second power amplifier PA 2. An output terminal of the first power amplifier PA 1 is connected to the input terminal of the first frequency division switch, and an output terminal of the second power amplifier PA 2 is connected to the input terminal of the second frequency division switch.

In the first circuit, the fifth low noise amplifier is connected to an output terminal of the eleventh frequency division switch, one terminals of the 2 filters are respectively connected to 2 input terminals of the eleventh frequency division switch, the other terminals of the 2 filters are respectively connected to 2 input terminals of the twelfth frequency division switch, first terminals of the 3 duplexers are respectively connected to 3 output terminals of the first frequency division switch, second terminals of the 3 duplexers are respectively connected to 3 input terminals of the eleventh frequency division switch, and third terminals of the 3 duplexers are respectively connected to 3 input terminals of the twelfth frequency division switch. An output terminal of the twelfth frequency division switch is connected to the first antenna.

In the second circuit, the sixth low noise amplifier is connected to an output terminal of the thirteenth frequency division switch, one terminals of the 2 filters are respectively connected to 2 input terminals of the thirteenth frequency division switch, the other terminals of the 2 filters are respectively connected to 2 input terminals of the fourteenth frequency division switch, the first terminals of the M duplexers are respectively connected to the M first output terminals of the second frequency division switch, second terminals of the 3 duplexers are respectively connected to 3 input terminals of the thirteenth frequency division switch, and third terminals of the 3 duplexers are respectively connected to 3 input terminals of the fourteenth frequency division switch. An output terminal of the fourteenth frequency division switch is connected to the second antenna.

It may be understood that the output terminal of the frequency division switch in FIG. 13 may also be used as an input terminal of a signal, and the input terminal thereof may also be used as an output terminal of the signal. Whether a port of the frequency division switch is an input terminal or an output terminal is related to a flow direction of a signal. The output terminal and the input terminal are not limited in the description of this embodiment of this application.

For example, as shown in FIG. 13, the first circuit and the second circuit have a same composition. Therefore, when the first circuit and the second circuit are disposed in the terminal device, circuit elements of a same type can be used.

For example, when the first antenna of the terminal device receives a signal, the first antenna may transmit the received signal to the first circuit. When the second antenna of the terminal device receives a signal, the second antenna may transmit the received signal to the second circuit. When the terminal device needs to send a signal by using the first antenna, the radio frequency chip sends a relatively small signal to the first power amplifier by using the fifth connecting line. The first power amplifier processes the signal, and transmits a processed signal to the first antenna by using the first circuit for sending. When the terminal device needs to send a signal by using the second antenna, the radio frequency chip sends a relatively small signal to the second power amplifier by using the sixth connecting line. The second power amplifier processes the signal, and transmits a processed signal to the second antenna by using the second circuit for sending.

In this way, a distance between the first antenna and the first circuit is relatively close, so that in a process in which the first antenna transmits the received signal to the first circuit, signal losses are relatively small. A distance between the second antenna and the second circuit is relatively close, so that in a process in which the second antenna transmits the received signal to the second circuit, signal losses are relatively small. In addition, the first power amplifier is disposed close to the first circuit, the second power amplifier is disposed close to the second circuit, and the radio frequency chip is connected to the first power amplifier and the second power amplifier by using the coaxial line or the radio frequency flexible board, so that the small signal output by the radio frequency chip is transmitted by using the coaxial line or the radio frequency flexible board, but the signal processed by the power amplifier does not need to be transmitted by using the coaxial line or the radio frequency flexible board. This can reduce losses in a signal transmission process, and improve signal transmission efficiency.

With reference to the terminal device described in the foregoing embodiment, an embodiment of this application further provides a control method, and the method is applied to the terminal device described in the foregoing embodiment.

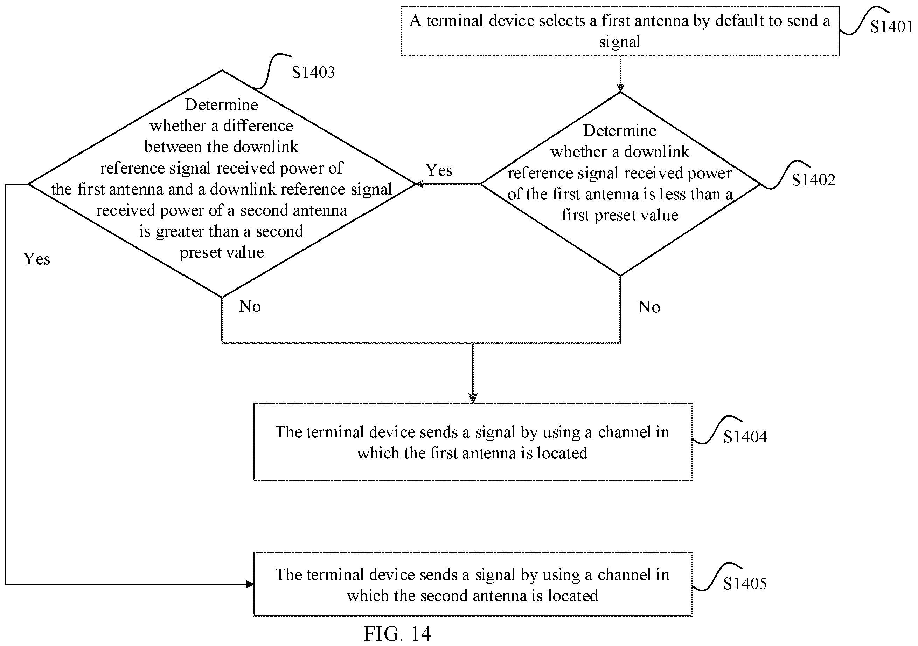

FIG. 14 is a schematic flowchart of a control method according to an embodiment of this application. As shown in FIG. 14, the method may include the following steps.

S1401. A terminal device selects a first antenna by default to send a signal.

For example, corresponding to the circuit diagrams in the foregoing embodiments, there are the following 3 possible implementations for the terminal device to select the first antenna by default to send a signal.

In a possible implementation, in the circuit shown in FIG. 7 or FIG. 9, the terminal device may control, by using the controller, the second output terminal of the first frequency division switch to be in an off state, and control any first output terminal of the first frequency division switch to be in an on state.

In another possible implementation, in the circuit shown in FIG. 11, the terminal device may control, by using the controller, a second output terminal of the selection switch to be in an on state, and control a third output terminal to be in an off state.

In still another possible implementation, in the circuit shown in FIG. 13, the terminal device controls, by using the controller, the radio frequency chip RFIC to access, by using the first terminal, the circuit in which the first power amplifier is located.

S1402. The terminal device determines whether a downlink reference signal received power of the first antenna is less than a first preset value.

The first preset value is a value indicating a downlink reference signal received power. The first preset value is not limited in this embodiment of this application.

For example, when the terminal device performs downlink signal transmission by using the first antenna, the terminal device may obtain the downlink reference signal received power of the first antenna by using the controller, and determine whether the downlink reference signal received power of the first antenna is less than the first preset value. When the downlink reference signal received power of the first antenna is greater than or equal to the first preset value, the following step S1404 may be performed. When the downlink reference signal received power of the first antenna is less than the first preset value, the following step S1403 may be performed.

S1403. The terminal device determines whether a difference between the downlink reference signal received power of the first antenna and a downlink reference signal received power of a second antenna is greater than a second preset value.

The second preset value is a value indicating the difference between the downlink reference signal received powers of the first antenna and the second antenna. The second preset value is not limited in this embodiment of this application.

For example, when the terminal device performs downlink signal transmission by using the first antenna, the terminal device may obtain the downlink reference signal received power of the first antenna by using the controller. When the terminal device performs downlink signal transmission by using the second antenna, the terminal device may obtain the downlink reference signal received power of the second antenna by using the controller. Further, the terminal device may determine, by using the controller, whether the difference between the downlink reference signal received power of the first antenna and the downlink reference signal received power of the second antenna is greater than the second preset value. When the difference between the downlink reference signal received power of the first antenna and the downlink reference signal received power of the second antenna is greater than the second preset value, the following step S1405 may be performed. When the difference between the downlink reference signal received power of the first antenna and the downlink reference signal received power of the second antenna is less than or equal to the second preset value, the following step S1404 may be performed.

S1404. The terminal device sends a signal by using a channel in which the first antenna is located.

For example, corresponding to the circuit diagrams in the foregoing embodiments, there are the following 3 possible implementations for the terminal device to select the first antenna by default to send a signal.

In a possible implementation, in the circuit shown in FIG. 7 or FIG. 9, the terminal device may control, by using the controller, the power amplifier to access the first circuit by using any first output terminal of the first frequency division switch.

In another possible implementation, in the circuit shown in FIG. 11, the terminal device may control, by using the controller, the second terminal of the selection switch to be in an on state, and control the power amplifier to access the first circuit by using the third connecting line and any first output terminal of the first frequency division switch.

In still another possible implementation, in the circuit shown in FIG. 13, the terminal device controls, by using the controller, the radio frequency chip RFIC to access, by using the first terminal, the circuit in which the first power amplifier is located.

S1405. The terminal device sends a signal by using a channel in which the second antenna is located.

For example, corresponding to the circuit diagrams in the foregoing embodiments, there are the following 3 possible implementations for the terminal device to select the first antenna by default to send a signal.

In a possible implementation, in the circuit shown in FIG. 7 or FIG. 9, the terminal device may control, by using the controller, the power amplifier to access the second circuit by using any output terminal of the second frequency division switch.

In another possible implementation, in the circuit shown in FIG. 11, the terminal device may control, by using the controller, the third terminal of the selection switch to be in an on state, and control the power amplifier to access the second circuit by using the fourth connecting line and any output terminal of the second frequency division switch.

In still another possible implementation, in the circuit shown in FIG. 13, the terminal device controls, by using the controller, the radio frequency chip RFIC to access, by using the second terminal, the circuit in which the second power amplifier is located.

In conclusion, according to the control method provided in this embodiment of this application, the terminal device can determine, in the first antenna and the second antenna according to a case in which downlink signal transmission is performed on the first antenna and the second antenna, an antenna with a relatively good transmission status to send a signal, thereby improving signal sending efficiency.

The foregoing mainly describes the solutions provided in the embodiments of this application from a method perspective. To implement the foregoing functions, the terminal device includes corresponding hardware structures and/or software modules for performing the functions. A person skilled in the art should be easily aware that the method steps in the examples described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. Persons skilled in the art may use different methods to implement the described functions for each specific application, but it should not be considered that such an implementation goes beyond the scope of this application.

In the embodiments of this application, an apparatus for implementing a signal sending method may be divided into functional modules based on the foregoing method examples, for example, each functional module may be obtained through division for each corresponding function, or two or more functions may be integrated into one processing module. The integrated module may be implemented in a form of hardware, or may be implemented in a form of a software functional module. It should be noted that division of the modules in the embodiments of this application is an example, and is merely logical function division. During actual implementation, there may be another division manner.

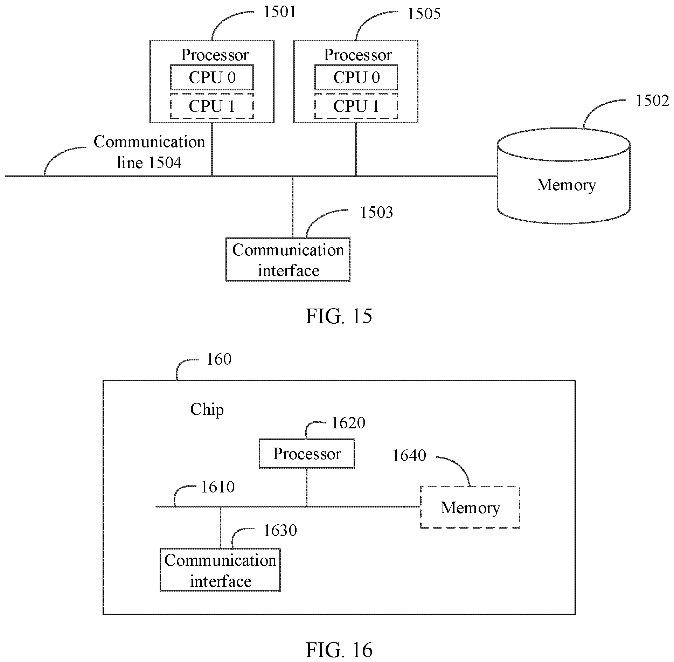

FIG. 15 is a schematic diagram of a hardware structure of another terminal device according to an embodiment of this application. As shown in FIG. 15, the terminal device includes a processor 1501, a communication line 1504, and at least one communication interface (a communication interface 1503 is used as an example for description in FIG. 15).

The processor 1501 may be a general-purpose central processing unit (central processing unit, CPU), a microprocessor, an application-specific integrated circuit (application-specific integrated circuit, ASIC), an SOC, an MCU, or one or more integrated circuits configured to control program execution in the solutions in this application.

The communication line 1504 may include a circuit for transferring information between the foregoing components.

The communication interface 1503 uses any apparatus such as a transceiver and is configured to communicate with another device or a communication network, for example, an Ethernet or a wireless local area network (wireless local area networks, WLAN).

Possibly, the terminal device may further include a memory 1502.

The memory 1502 may be a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer, but is not limited thereto. The memory may exist independently, and is connected to the processor by using the communication line 1504. The memory may alternatively be integrated into the processor.

The memory 1502 is configured to store computer-executable instructions for performing the solutions in this application, and the processor 1501 controls execution. The processor 1501 is configured to execute the computer-executable instructions stored in the memory 1502.

Possibly, the computer-executable instructions in this embodiment of this application may also be referred to as application program code. This is not specifically limited in this embodiment of this application.

During specific implementation, in an embodiment, the processor 1501 may include one or more CPUs, for example, a CPU 0 and a CPU 1 in FIG. 15.

During specific implementation, in an embodiment, the terminal device may include a plurality of processors, for example, the processor 1501 and a processor 1505 in FIG. 15. Each of these processors may be a single-core (single-CPU) processor or a multi-core (multi-CPU) processor. The processor herein may be one or more devices, circuits, and/or processing cores configured to process data (for example, computer program instructions).

FIG. 16 is a schematic diagram of a structure of a chip according to an embodiment of this application. A chip 160 includes one or at least two (including two) processors 161, a communication line 162, a communication interface 163, and a memory 164.

In some implementations, the memory 164 stores the following elements: an executable module or a data structure, or a subset thereof, or a superset thereof.

The method described in the embodiments of this application may be applied to the processor 161 or implemented by the processor 161. The processor 161 may be an integrated circuit chip having a capability of processing a signal. During implementation, the steps of the method may be performed by using an integrated logic circuit of hardware in the processor 161 or by using instructions in a form of software. The foregoing processor 161 may be a general-purpose processor (for example, a microprocessor or a conventional processor), a digital signal processor (digital signal processing, DSP), an application specific integrated circuit (application specific integrated circuit, ASIC), a field-programmable gate array (field-programmable gate array, FPGA) or another programmable logic component, a discrete gate, a transistor logic component, or a discrete hardware component.

The processor 161, the memory 164, and the communication interface 163 may communicate with each other by using the communication line 162.

In the foregoing embodiments, the instructions stored in the memory for execution by the processor may be implemented in a form of a computer program product. The computer program product may be written in the memory in advance, or may be downloaded and installed in the memory in a form of software.

An embodiment of this application further provides a computer program product, including one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium on which the computer can perform storage, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The computer-readable medium may include a computer storage medium and a communication medium, and may further include any medium that enables a computer program to be transmitted from a place to another place. The storage medium may be any target medium accessible by a computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc. The magnetic disk usually reproduces data in a magnetic manner, and the optical disc reproduces data optically by using laser.

It should be noted that the objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions in the present invention shall fall within the protection scope of the present invention.

## Claims

1. A terminal device, wherein the terminal device comprises a power amplifier, a first circuit, a second circuit, a first antenna, a second antenna, a first frequency division switch, and a second frequency division switch; the first circuit comprises N duplexers, and the second circuit comprises M duplexers; the first frequency division switch comprises N first output terminals, and the second frequency division switch comprises M output terminals; and both N and M are natural numbers;
first terminals of the N duplexers are respectively connected to the N first output terminals of the first frequency division switch, and first terminals of the M duplexers are respectively connected to the M output terminals of the second frequency division switch; and the first antenna is connected to the first circuit, and the second antenna is connected to the second circuit; and
the power amplifier is configured to access the first circuit to support the first antenna to send a signal, or access the second circuit to support the second antenna to send a signal.

2. The terminal device according to claim 1, wherein the second circuit is disposed at a location less than a preset distance from the second antenna; the terminal device further comprises a first connecting line; and the first frequency division switch further comprises a second output terminal; and
the power amplifier is connected to an input terminal of the first frequency division switch, the second output terminal is connected to one end of the first connecting line, and the other end of the first connecting line is connected to an input terminal of the second frequency division switch.

3. The terminal device according to claim 2, wherein the terminal device further comprises a second connecting line; the first circuit further comprises a first low noise amplifier, a third frequency division switch, a fourth frequency division switch, and Q filters, the second circuit further comprises a second low noise amplifier, a fifth frequency division switch, a sixth frequency division switch, and L filters, and both Q and L are natural numbers; the third frequency division switch comprises Q+N input terminals, and the fourth frequency division switch comprises Q+N input terminals; and the fifth frequency division switch comprises L+M input terminals, and the sixth frequency division switch comprises L+M input terminals;
the first low noise amplifier is connected to an output terminal of the third frequency division switch, one terminals of the Q filters are respectively connected to the Q input terminals of the third frequency division switch, the other terminals of the Q filters are respectively connected to the Q input terminals of the fourth frequency division switch, second terminals of the N duplexers are respectively connected to the N input terminals of the third frequency division switch, third terminals of the N duplexers are respectively connected to the N input terminals of the fourth frequency division switch, an output terminal of the fourth frequency division switch is connected to one end of the second connecting line, and the other end of the second connecting line is connected to the first antenna; and
the second low noise amplifier is connected to an output terminal of the fifth frequency division switch, one terminals of the L filters are respectively connected to the L input terminals of the fifth frequency division switch, the other terminals of the L filters are respectively connected to the L input terminals of the sixth frequency division switch, second terminals of the M duplexers are respectively connected to the M input terminals of the fifth frequency division switch, third terminals of the M duplexers are respectively connected to the M input terminals of the sixth frequency division switch, and an output terminal of the sixth frequency division switch is connected to the second antenna.

4. The terminal device according to any one of claims 1-3, wherein the terminal device further comprises a controller; and
the controller is configured to: when a downlink reference signal received power of the first antenna is greater than or equal to a first preset value, or when the downlink reference signal received power of the first antenna is less than the first preset value, and a first value is less than or equal to a second preset value, control the power amplifier to access the first circuit by using any first output terminal of the first frequency division switch, wherein the first value is a difference between the downlink reference signal received power of the first antenna and a downlink reference signal received power of the second antenna; and
the controller is further configured to: when the downlink reference signal received power of the first antenna is less than the first preset value, and the first value is greater than the second preset value, control the power amplifier to access the second circuit by using any output terminal of the second frequency division switch.

5. The terminal device according to claim 1, wherein the first circuit is disposed at a location less than a preset distance from the first antenna; and the second circuit is disposed at a location less than a preset distance from the second antenna;
the terminal device further comprises a third connecting line and a fourth connecting line; and
one end of the third connecting line is connected to the power amplifier, the other end of the third connecting line is connected to an input terminal of the first frequency division switch, one end of the fourth connecting line is connected to the power amplifier, and the other end of the fourth connecting line is connected to an input terminal of the second frequency division switch.

6. The terminal device according to claim 5, wherein the terminal device further comprises a selection switch; and
the power amplifier is connected to a first terminal of the selection switch, a second terminal of the selection switch is connected to one end of the third connecting line, and a third terminal of the selection switch is connected to one end of the fourth connecting line.

7. The terminal device according to claim 5 or 6, wherein the first circuit further comprises a third low noise amplifier, a seventh frequency division switch, an eighth frequency division switch, and S filters, the second circuit further comprises a fourth low noise amplifier, a ninth frequency division switch, a tenth frequency division switch, and Z filters, and both S and Z are natural numbers; the seventh frequency division switch comprises S+N input terminals, and the eighth frequency division switch comprises S+N input terminals; and the ninth frequency division switch comprises Z+M input terminals, and the tenth frequency division switch comprises Z+M input terminals;
the third low noise amplifier is connected to an output terminal of the seventh frequency division switch, one terminals of the S filters are respectively connected to the S input terminals of the seventh frequency division switch, the other terminals of the S filters are respectively connected to the S input terminals of the eighth frequency division switch, second terminals of the N duplexers are respectively connected to the N input terminals of the seventh frequency division switch, third terminals of the N duplexers are respectively connected to the N input terminals of the eighth frequency division switch, and an output terminal of the eighth frequency division switch is connected to the first antenna; and
the fourth low noise amplifier is connected to an output terminal of the ninth frequency division switch, one terminals of the Z filters are respectively connected to the Z input terminals of the ninth frequency division switch, the other terminals of the Z filters are respectively connected to the Z input terminals of the tenth frequency division switch, second terminals of the M duplexers are respectively connected to the M input terminals of the ninth frequency division switch, third terminals of the M duplexers are respectively connected to the M input terminals of the tenth frequency division switch, and an output terminal of the tenth frequency division switch is connected to the second antenna.

8. The terminal device according to claim 6 or 7, wherein the terminal device further comprises a controller; and
the controller is configured to: when a downlink reference signal received power of the first antenna is greater than or equal to a first preset value, or when the downlink reference signal received power of the first antenna is less than the first preset value, and a first value is less than or equal to a second preset value, control the second terminal of the selection switch to be in an on state, and control the power amplifier to access the first circuit by using the third connecting line and any first output terminal of the first frequency division switch, wherein the first value is a difference between the downlink reference signal received power of the first antenna and a downlink reference signal received power of the second antenna; and
the controller is further configured to: when the downlink reference signal received power of the first antenna is less than the first preset value, and the first value is greater than the second preset value, control the third terminal of the selection switch to be in an on state, and control the power amplifier to access the second circuit by using the fourth connecting line and any output terminal of the second frequency division switch.

9. A control method, applied to the terminal device according to any one of claims 1-8, wherein the method comprises:
when a downlink reference signal received power of a first antenna is greater than or equal to a first preset value, or when the downlink reference signal received power of the first antenna is less than the first preset value, and a first value is less than or equal to a second preset value, controlling, by a controller of the terminal device, a power amplifier to access a first circuit by using any first output terminal of a first frequency division switch, wherein the first value is a difference between the downlink reference signal received power of the first antenna and a downlink reference signal received power of the second antenna; or
when the downlink reference signal received power of the first antenna is less than the first preset value, and the first value is greater than the second preset value, controlling, by the controller, the power amplifier to access a second circuit by using any output terminal of a second frequency division switch.

10. A terminal device, wherein the terminal device comprises a radio frequency chip, a fifth connecting line, a sixth connecting line, a first power amplifier, a second power amplifier, a first circuit, a second circuit, a first antenna, a second antenna, a first frequency division switch, and a second frequency division switch; the first circuit comprises N duplexers, and the second circuit comprises M duplexers; the first frequency division switch comprises N output terminals, and the second frequency division switch comprises M output terminals; and both N and M are natural numbers;
a first terminal of the radio frequency chip is connected to one end of the fifth connecting line, the other end of the fifth connecting line is connected to an input terminal of the first power amplifier, an output terminal of the first power amplifier is connected to an input terminal of the first frequency division switch, and first terminals of the N duplexers are respectively connected to the N output terminals of the first frequency division switch;
a second terminal of the radio frequency chip is connected to one end of the sixth connecting line, the other end of the sixth connecting line is connected to an input terminal of the second power amplifier, an output terminal of the second power amplifier is connected to an input terminal of the second frequency division switch, and first terminals of the M duplexers are respectively connected to the M output terminals of the second frequency division switch;
the first antenna is connected to the first circuit, and the second antenna is connected to the second circuit;
the first power amplifier is configured to access the first circuit to support the first antenna to send a signal; and
the second power amplifier is configured to access the second circuit to support the second antenna to send a signal.

11. The terminal device according to claim 10, wherein the first circuit is disposed at a location less than a preset distance from the first antenna; the second circuit is disposed at a location less than the preset distance from the second antenna; and the first power amplifier is disposed at a location less than the preset distance from the first circuit, and the second power amplifier is disposed at a location less than the preset distance from the second circuit.

12. The terminal device according to claim 11, wherein the first circuit comprises a fifth low noise amplifier, an eleventh frequency division switch, a twelfth frequency division switch, and R filters, the second circuit further comprises a sixth low noise amplifier, a thirteenth frequency division switch, a fourteenth frequency division switch, and T filters, and both R and T are natural numbers; the eleventh frequency division switch comprises N+R input terminals, and the twelfth frequency division switch comprises N+R input terminals; and the thirteenth frequency division switch comprises M+T input terminals, and the fourteenth frequency division switch comprises M+T input terminals;
the fifth low noise amplifier is connected to an output terminal of the eleventh frequency division switch, one terminals of the R filters are respectively connected to the R input terminals of the eleventh frequency division switch, the other terminals of the R filters are respectively connected to the R input terminals of the twelfth frequency division switch, second terminals of the N duplexers are respectively connected to the N input terminals of the eleventh frequency division switch, third terminals of the N duplexers are respectively connected to the N input terminals of the twelfth frequency division switch, and an output terminal of the twelfth frequency division switch is connected to the first antenna; and
the sixth low noise amplifier is connected to an output terminal of the thirteenth frequency division switch, one terminals of the T filters are respectively connected to the T input terminals of the thirteenth frequency division switch, the other terminals of the T filters are respectively connected to the T input terminals of the fourteenth frequency division switch, second terminals of the M duplexers are respectively connected to the M input terminals of the thirteenth frequency division switch, third terminals of the M duplexers are respectively connected to the M input terminals of the fourteenth frequency division switch, and an output terminal of the fourteenth frequency division switch is connected to the second antenna.

13. The terminal device according to any one of claims 10-12, wherein the terminal device further comprises a controller; and
the controller is configured to: when a downlink reference signal received power of the first antenna is greater than or equal to a first preset value, or when the downlink reference signal received power of the first antenna is less than the first preset value, and a first value is less than or equal to a second preset value, control the first terminal of the radio frequency chip to access a channel in which the first power amplifier is located, wherein the first value is a difference between the downlink reference signal received power of the first antenna and a downlink reference signal received power of the second antenna; and
the controller is further configured to: when the downlink reference signal received power of the first antenna is less than the first preset value, and the first value is greater than the second preset value, control the second terminal of the radio frequency chip to access a channel in which the second power amplifier is located.

14. A control method, applied to the terminal device according to any one of claims 10-13, wherein the method comprises:
when a downlink reference signal received power of a first antenna is greater than or equal to a first preset value, or when the downlink reference signal received power of the first antenna is less than the first preset value, and a first value is less than or equal to a second preset value, controlling, by a controller of the terminal device, a first terminal of the radio frequency chip to access a channel in which a first power amplifier is located, wherein the first value is a difference between the downlink reference signal received power of the first antenna and a downlink reference signal received power of a second antenna; or
when the downlink reference signal received power of the first antenna is less than the first preset value, and the first value is greater than the second preset value, controlling, by the controller, a second terminal of the radio frequency chip to access a channel in which the second power amplifier is located.

15. A terminal device, comprising a memory and a controller, wherein the memory is configured to store a computer program, and the controller is configured to execute the computer program, to perform the method according to claim 9 or 14.

16. A computer-readable storage medium, wherein the computer-readable storage medium stores instructions, and when the instructions are executed, a computer is enabled to perform the method according to claim 9 or 14.

17. A computer program product, comprising a computer program, wherein when the computer program is run, an electronic device is enabled to perform the method according to claim 9 or 14.
